# EUROPEAN PATENT SPECIFICATION

(11) **EP 2 668 230 B1**
(45) Date of publication and mention of the grant of the patent: **30.05.2018**
(21) Application number: 12703930.3
(22) Date of filing: 26.01.2012
(51) Int. Cl.: C08L 23/06, C09J 123/06, B32B 27/32

(54) **PROCESS FOR FORMING MULTILAYER STRUCTURES CONTAINING A METAL LAYER**
VERFAHREN ZUR HERSTELLUNG VON MEHRSCHICHTIGEN STRUKTUREN MIT EINER METALLSCHICHT
PROCÉDÉ DE FORMATION DE STRUCTURES MULTICOUCHES CONTENANT UNE COUCHE MÉTALLIQUE

(30) Priority: 27.01.2011 US 201113015367
(43) Date of publication of application: 04.12.2013
(73) Proprietor: Equistar Chemicals, LP, Houston, Texas 77010 (US)
(72) Inventor: BOTROS, Maged, G., Liberty Township, OH 45044 (US); LEE, Chun, Cincinnati, OH 45242 (US)
(74) Representative: Sacco, Marco
(86) International application number: PCT/US2012/022778
(87) International publication number: WO 2012/103371

(56) References cited:
- WO-A1-92/06844
- GB-A- 2 113 696
- US-A- 5 066 542
- US-B1- 6 184 298
- US-B1- 6 855 432

## Description

### FIELD OF THE INVENTION

The invention relates to a process for forming multilayer structures having a metal layer. More particularly, the invention relates to a process for forming multilayer structures having a metal layer and an SBS-containing tie layer, at low temperature and contact time.

### BACKGROUND OF THE INVENTION

Over the past decade, the transportation, building and storage industries have increasingly relied upon composite materials to displace construction designs composed entirely of wood or metal. However, while the use of all-metal construction for transportation panels in semi-trailers, truck bodies, and portable storage containers has declined as a result of the acceptance of composite materials, aluminum, steel and other metals are still quite extensively used as part of the composite because of the durability and strength they provide. These applications benefit from processes where the metal layer is bonded to other layers in the structure in as efficient manner as possible. Similar benefits exist in other applications, such as adhering nails to nail-collation tape, wire and cable products, where an aluminum wire is typically adhered to the outer layer of low density polyethylene, or in composite multilayer pipe applications, where an aluminum interior layer is sandwiched between interior and exterior layers of polyethylene, cross-linked polyethylene or polypropylene.

WO92/06844 relates to a blend of HDPE grafted with succinic acid or succinic anhydride with LLDPE, especially ethylene/1-octene copolymers. The blends are endowed with adhesive properties at elevated temperatures.

US 5,066,542 relates to a blend of HDPE grafted with succinic acid or succinic anhydride with LLDPE, especially ethylene/1-octene copolymers. The grafted HDPE is derived from a grafting reaction with maleic acid or maleic anhydride, and thus contains about 0.1 to about 5 weight percent of succinic acid or succinic anhydride groups. The LLDPE copolymer having a density in the range of about 0.8 grams/cubic centimeter to about 0.94 grams/cubic centimeter and a melt index in the range of about 0.1 grams/10 minutes to about 40 grams/10 minutes. GB2113696 relates to an adhesive blend which comprises, by weight:
(a) from 0.1 to 40 parts of a graft polymer of from 70 to 99.999% of a polyethylene backbone grafted with
   from 30 to 0.001% of at least one grafting monomer which is a polymerizable ethylenically unsaturated
   carboxylic acid or derivative thereof, for a total of 100%,
(b) from 0.1 to 99 parts of LDPE, an ethylene-unsaturated ester copolymer, or LLDPE, or a mixture of two or more thereof, and (c) from 0.1 to 99 parts of at least one homopolymer or copolymer of an α-olefin having 4 to 15 carbon atoms, for a total of 100 parts.

US 6,184,298 relates to adhesive compositions having a modified polyethylene; an unmodified polyethylene of a certain density and a styrene-based elastomer. Various adhesives are known to bond layers of dissimilar materials, such as olefin polymers to EVOH or metals, and are useful in multilayer applications. Adhesives containing ethylene-propylene rubbers are widely used commercially in such applications. Styrene-based adhesives have also been used. U.S. Pat. No. 6,184,298 discloses adhesives containing unmodified styrene-based elastomers in multilayer structures containing polyethylene and polypropylene. U.S. Pat. Appl. Publ. 2007/0167569 discloses adhesives containing styreneisoprene-styrene polymers in multilayer structures containing styrene polymer layers. U.S. Pat Appl. Publ. 2009/0171022 discloses adhesives containing blends of styrene-isoprene-styrene and styrene-butadiene-styrene polymers in multilayer structures containing styrene polymer layers. U.S. Pat. Publ. 2008/0163978 discloses extrusion and lamination processes where metal and polyolefin layers are bonded using a tie-layer containing two functionalized ethylene polymers. However, a continuing need exists for processes that can efficiently and effectively bond metal layers to other materials in the more demanding conditions of reduced temperature and contact time.

### SUMMARY OF THE INVENTION

The present invention relates to a process according to claims 1 to 8 for producing a multilayer structure comprising contacting an adhesive layer having a first side and a second side, on its first side with a metal layer having a first side and a second side, on its first side at a temperature of (325ºF to 425ºF) 162.7 °C to 218.3 °C for a contact time of 0.5 to 5.0 seconds, thereby adhering the adhesive layer to the metal layer. The adhesive layer comprises 45 to 85 wt% of an ethylene-C4-8 α-olefin linear low density copolymer; 5 to 25 wt% of a polymer grafted with an ethylenically unsaturated carboxylic acid or acid derivative, the polymer selected from polyethylene resins or elastomers; and 0 to 30 wt% of a styrene-butadiene-styrene triblock copolymer having an MI of 5 to 50.

### DETAILED DESCRIPTION OF THE INVENTION

It has unexpectedly been found that it is possible to produce a multilayer structure having a metal layer by a process of contacting a metal layer and an adhesive layer containing a styrene-butadiene-styrene triblock copolymer at reduced temperature and contact times. The process provides advantages in lower operating costs and higher production rates, while retaining desired levels of product adhesion.

### Contacting the adhesive and metal layers.

The adhesive layer and metal layer can be contacted by any method typically practiced by those skilled in the art, to form an A/M bi-layer structure, where "A" is the adhesive layer and "M" is the metal layer. Preferably, the adhesive layer is contacted with the metal layer in an extrusion lamination or compression molding process where the adhesive and/or metal are heated and pressed together. Extrusion lamination can include hot roll or calendar lamination processes, where the adhesive and metal layers are drawn onto one or more heated rollers. The heated rolls heat the adhesive and metal layers and press them together. Alternately, the adhesive layer and/or the metal layer can be passed over an open flame as in a flame lamination process, the adhesive layer being softened by the flame and/or by the heat transferred from the metal, with the metal and adhesive layers then being pressed together. In sheet extrusion processes, a polyethylene or polypropylene sheet layer is extruded and then brought into contact with the adhesive layer. The polymer/adhesive multilayer structure is brought into contact with the metal layer. The residual heat from extrusion of the sheet layer softens the adhesive which then bonds the polymer sheet to the metal layer.

In compression molding processes, a multilayer structure containing an adhesive layer and a metal layer is first placed in an open, heated mold cavity. Preferably, the multilayer layer structure to be molded is pre-heated. The mold is closed with a top force or plug member, pressure is applied to force the multilayer structure into contact with all mold areas, and heat and pressure are maintained until the molding material has cured.

Preferably, the adhesive and metal are adhered by a lamination process.

The adhesive layer and the metal layer are contacted at a temperature from 162.7°C to 218.3 °C (325°F to 425°F), more preferably, 176.6 °C to 215.5 °C (350°F to 420°F), and most preferably 198.8 °C to 210 °C (390°F to 410°F). Preferably, the adhesive layer and the metal layer are contacted at a pressure of 0.069 MPa to 0.345 MPa (10 psig to 50 psig). In extrusion lamination processes, the pressure refers to the nip roll pressure. In compression molding processes, the pressure refers to the pressure exerted on the mold.

The contact time for the adhesive layer and the metal layer is 0.5 to 5.0 seconds. Preferably, the contact time is 0.5 to 2.5 seconds, most preferably 0.7 to 1.2 seconds. For the purposes of this specification, the term contact time is defined as the period during which the adhesive layer and metal layer are pressed together at a temperature of at least 162.7 °C (325°F) and a pressure of at least 0.069 MPa (10 psig). Preferably, the level of adhesion achieved between the adhesive layer and the metal layer is at least 62.6 Kg/m (3.5 pounds per linear inch (PLI)).

### Metal Layer

For the purposes of this specification, the term metal layer can include aluminum and its alloys, such as aluminium, Alnico, duraluin, AA-8000, and magnalium; antimony; bismuth and its alloys, such as cerrosafe, wood's metal and rose metal; cobalt and its alloys, such as megallium, satellite, ultimet, vitallium, copper and its alloys, such as arsenical copper, beryllium copper, billon, brass, bronze, constantan; gold and its alloys such as electrum, tumbaga, rose gold and white gold; iron and its alloys, such as carbon steel, stainless steel, and galvanized steel; lead and its alloys, such as solder, terne, and molybdochalkos; magnesium and its alloys such as magnox and elektron; manganese; nickel and its alloys, such as alumel, german silver, chromel, hastelloy, inconel, monel metal, nichrome, nicrosil, nisil, nitinol, cupronickel, and alnico; platinum; palladium; silver and its alloys, such as billon, sterling silver, Britannia silver, goloid, electrum, argentium sterling silver, shibuichi, and platinum sterling; tin and its alloys, such as britannium, and pewter; titanium and its alloys, such as beta c and 6al-4v; tungsten; or zinc and its alloys such as zamak. Preferably, the metal is selected from aluminum and its alloys, copper and its alloys, carbon steel, stainless steel or galvanized steel. Most preferably, the metal is selected from aluminum and galvanized steel.

Preferably, the metal layer has a thickness of about 0.254 to 0.762 mm (10 to 30 mils), more preferably from 0.381 to 0.635 mm (from 15 to 25 mils).

### Adhesive Layer

The adhesive layer comprises a styrene-butadiene-styrene triblock copolymer (SBS), a polyethylene resin grafted with an ethylenically unsaturated carboxylic acid or acid derivative, and an ethylene-C₄₋₈ α-olefin linear low density copolymer. SBS triblock copolymers useful for the invention are commercially available thermoplastic elastomers which preferably contain from 25 to about 60 wt% styrene. More preferably, the SBS triblock copolymers contain 30 to 55 wt% styrene. Most preferably, the SBS triblock copolymers contain 40 to 50 wt% styrene. The melt indexes (MI) of the SBS copolymers are from 5 to 50 dg/min, determined in accordance with ASTM D 1238 (200° C; 5 kg). Preferably, the melt indexes are in the range from 10 to 35 dg/min, more preferably from 20 to 30 dg/min.

The grafted polymer is obtained by reacting unsaturated carboxylic acids and carboxylic acid anhydrides, or derivatives thereof, with a polyethylene resin or a plastomer, under grafting conditions. The grafting monomers, i.e., acid, anhydride or derivative, are incorporated along the polyethylene or plastomer backbone. When the polymer to be grafted is a polyethylene resin, the resin includes ethylene homopolymers and copolymers of ethylene with propylene, butene, 4-methyl pentene, hexene, octene, or mixtures thereof. Preferably, the polyethylene to be grafted is HDPE or LLDPE. Most preferably, the polyethylene to be grafted is HDPE.

When the polymer to be grafted is a plastomer, the plastomer includes copolymers of ethylene with about 2.5 to 13 mole % of a C4-8 α-olefin having densities of 0.85 to 0.92 g/cm3. The plastomers are produced using metallocene or single-site catalysts. Preferably, the plastomer is an ethylene copolymer of butene-1, hexene-1 or octene-1. Such plastomers are commercially available from Dow Chemical Company in its ENGAGETM line of polymers or from Exxon Chemical Company's in its EXACTTM line of products.

The carboxylic acids or anhydrides useful as grafting monomers include compounds such as acrylic acid, maleic acid, fumaric acid, citaconic acid, mesaconic acid, maleic anhydride, 4-methyl cyclohex-4-ene-1,2-dicarboxylic acid or anhydride, bicyclo(2.2.2)oct-5-ene-2,3-dicarboxylic acid or anhydride 2-oxa-1,3-diketospiro(4,4)non-7-ene, bicyclo(2.2.1)hept-5-ene-2,3-dicarboxylic acid or anhydride, tetrahydrophthalic acid or anhydride, x-methylbicyclo(2.2.1)hept-5-ene-2,3-dicarboxylic acid or anhydride, nadic anhydride, methyl nadic anhydride, himic anhydride, and methyl himic anhydride. Maleic anhydride is a particularly useful grafting monomer. Acid and anhydride derivatives which can be used to graft the polyethylene or polypropylene include dialkyl maleates, dialkyl fumarates, dialkyl itaconates, dialkyl mesaconates, dialkyl citraconates and alkyl crotonates.

Grafting is accomplished by thermal and/or mechanical means in accordance with known procedures, with or without a free-radical generating catalyst such as an organic peroxide, where the grafted sample is prepared by heating a mixture of the polyolefin and graft monomer(s), with or without a solvent, while subjecting it to high shear. Preferably, the grafted products are prepared by melt blending the polyethylene or polypropylene in the substantial absence of a solvent, in the presence of the grafting monomer in a shear-imparting reactor, such as an extruder. Twin screw extruders such as those marketed by Werner-Pfleiderer under the designations ZSK-30, ZSK-53, ZSK-83, ZSK-90 and ZSK-92 are especially useful for carrying out the grafting operation. Preferably, the amount of acid or acid derivative comonomer(s) grafted onto the polyethylene or polypropylene ranges from 0.1 to 4 weight percent, preferably from 0.5 to 3.0 weight percent. Preferably, when maleic anhydride is grafted onto HDPE or LLDPE, the grafted maleic anhydride concentration is 0.5 to 4 weight percent, most preferably 1 to 2.5 weight percent. Melt indexes of the modified ethylene polymers as measured by ASTM D 1238, at 190°C, 2.16 kg, are preferably 1 to 20 dg/min, more preferably 5 to 18 dg/min.

The grafting reaction is carried out at a temperature selected to minimize or avoid rapid vaporization and consequent losses of the graft monomer and any catalyst that may be employed. The graft monomer concentration in the reactor is typically about 1 to about 5 wt.% based on the total reaction mixture weight. A temperature profile where the temperature of the polyolefin melt increases gradually through the length of the extruder/reactor up to a maximum in the grafting reaction zone and then decreases toward the reactor exit is preferred. The maximum temperature within the reactor should be such that significant vaporization losses and/or premature decomposition of any peroxide catalyst are avoided. The grafting monomer and any catalyst used are preferably added in neat form to the extruder/reactor.

The ethylene-C4-8 α-olefin linear low density copolymer used in the tie layer composition has a density of 0.910 to 930 g/cm3, as measured by ASTM D 792, and a melt index as measured by ASTM D 1238, condition 190/2.16, from 0.1 to 25 dg/min, preferably 0.5 to 5 dg/min, most preferably 1 to 3 dg/min,

The adhesive layer compositions can further comprise additives such as stabilizers, UV absorbers, metal deactivators, thiosynergists, peroxide scavengers, basic co-stabilizers, acid scavengers, nucleating agents, clarifiers, conventional fillers, dispersing agents, plasticizers, lubricants, emulsifiers, pigments, flow-control agents, optical brighteners, flame-proofing agents, antistatic agents, blowing agents, and mixtures thereof, which can be added in amounts well known to those skilled in the art.

The adhesive layer contains 50 to 85 wt%, preferably 67 to 80 wt% of the ethylene-C₄₋₈ α-olefin linear low density copolymer; 5 to 25 wt%, preferably 8 to 15 wt% of the polymer grafted with an ethylenically unsaturated carboxylic acid or acid derivative; and 10 to 30 wt%, preferably 10 to 20 wt%, more preferably 12 to 18 wt% of the styrene-butadiene-styrene triblock copolymer.

### Multilayer structures

Multilayer structures can be formed which include the metal/adhesive bi-layer structure. For example, an additional adhesive layer can be bonded to the metal layer to form an A/M/A structure, where A is the adhesive layer and M is the metal layer. Additionally, polyolefin layers can be included in the multilayer structure, e.g., a P/A/M/A or P/A/M/A/P structures can be formed where the metal layer is the core layer, and P is a polyolefin layer individually selected from polypropylene or polyethylene. Alternately, additional layers can be added to the A/M bilayer structure so that one or more of the outside layers is a metal, e.g., P/A/M, A/P/A/M, M/A/P/A/M. Formation of these multilayer structures can be formed either in a single step, i.e., all the layers are contacted together simultaneously, or separately.

### Polyolefin Layers

When polyolefin layers are used in the multilayer structure, they can be polyethylene, polypropylene or both. When the polyolefin layer is polypropylene, the polypropylene layer (PP) preferably includes a layer selected from a homopolymer of propylene, a copolymer of propylene with ethylene or C₄-C₁₀ alpha-olefins where the ethylene or C₄-C₁₀ alpha-olefin comonomers are present in amounts up to 10 wt% or mixtures thereof. The propylene homopolymers and copolymers can be produced using either Ziegler Natta or single-site catalysts, e.g., metallocene catalysts. When the propylene polymer is a copolymer, it preferably contains 2 to 6 wt% ethylene as a comonomer. More preferably, the propylene polymer layer is a propylene homopolymer.

When the polyolefin is polyethylene, the polyethylene layer (PE) is preferably selected from ethylene homopolymers, ethylene copolymers where the comonomer is chosen from C4-8 α-olefins, or mixtures thereof. The polyethylene layer can also include co-extruded structures of polyethylene with other ethylene copolymers such as ethylene-vinyl acetate copolymer and ethylene methyl acrylate copolymer. Ethylene homopolymers and ethylene-C4-8 α-olefin copolymers include very low density polyethylene (VLDPE), low density polyethylene (LDPE), linear low density polyethylene (LLDPE), medium density polyethylene (MDPE) and high density polyethylene (HDPE). VLDPE is defined as having a density of 0.860 to 0.910 g/cm3, as measured by ASTM D 792. LDPE and LLDPE are defined as having densities in the range 0.910 to 0.930 g/cm3. MDPE is defined as having a density of 0.930 to 0.945 g/cm3. HDPE is defined as having a density of at least 0.945 g/cm3, preferably from 0.945 to 0.969 g/cm3. The ethylene homopolymers and copolymers preferably have melt indexes, as measured by ASTM D 1238, condition 190/2.16, from 0.01 to 400 dg/min, preferably, from 0.1 to 200 dg/min., more preferably from 1 to 100 dg/min. Preferably, the polyethylene layer is LDPE. The polyolefin layer can be filled with filler, talc, glass fibers, mica, flame retardents or foaming agent.

The following examples illustrate the invention; however, those skilled in the art will recognize numerous variations within the spirit of the invention and scope of the claims.

Adhesive compositions of the examples were prepared using the following components:

| | |
|---|---|
| LLDPE-1 | LLDPE having a density of 0.918 g/cm³ and an MI of 2 dg/min. |
| Mgraft-1 | HDPE grafted with 1.9 wt% maleic anhydride, having an MI of 9.5 dg/min and a density of 0.952 g/cm³. |
| Mgraft-2 | HDPE grafted with 1.6 wt% maleic anhydride, having an MI of 6.0 dg/min and a density of 0.952 g/cm³. |
| Mgraft-3 | An ethylene-butene plastomer, commercially available from The Dow Chemical Company, and having an MI of 0.5 dg/min and a density of 0.901 g/cm³ was grafted with 1.9 wt% maleic anhydride. Grafting was conducted in a ZSK-40 twin screw extruder without addition of peroxide. The resulting MI of the grafted plastomer was 15.6 dg/min. |
| Mgraft-4 | A grafted plastomer was prepared as with Mgraft-3 but using 50 ppm of Luperox 101, an organic peroxide commercially available from Arkema Co. The resulting MI was 8.6 dg/min. |
| EPR-1 | Vistalon 722, an ethylene-propylene copolymer commercially available from ExxonMobil Chemical, containing 72 wt% ethylene and 28 wt% propylene, and having an MI of 1 dg/min. |
| SBS-1 | Vector 6241A, a styrene-butadiene-styrene triblock copolymer commercially available from Dexco Polymers LP, containing 43 wt% styrene and having an MI of 23 dg/min. |
| ADD-1 | A 50/50 blend of Irganox 1010 and Irgafos 168, both commercially available from BASF.. |

### CONTROL EXAMPLE 1

In Control Example 1, a 0.127 mm (5-mil) cast adhesive film was prepared by first melt blending in a ZSK-18 extruder an adhesive composition containing 74.8 wt% LLDPE-1, 10 wt% Mgraft-1, 15 wt% SBS-1, and 0.2 wt% ADD-1, and then extruding the blended mixture in a Killion KL-100 extruder having a temperature profile of 145ºC, 155ºC, 160ºC and 170ºC.

The adhesive film and a 0.559 mm (22 mil) aluminum strip were cut into 0.038 x 0.0762 meter (1.5" X 3") coupons, and a sample arranged, where the top layer was the adhesive film and the bottom layer was the aluminum. The bars of a Sentinel heat sealer were preheated before heat sealing, by closing the heat-sealing bars for three seconds with only the top bar heated. The sample was then heat sealed at 232.2 °C (450ºF) and 0.275 MPag (40 psig) for a contact time of one second. Following heat sealing, the coupons were cut into 0.025 x 0.0762 meter (1" X 3") strips for adhesion testing. Adhesion was determined as pounds per linear inch (PLI) on the heat-sealed sample by ASTM method D1876 in an Instron tensile tester, by measuring the force required to separate the layers in a T-Peel configuration at a cross head speed of 10 in/minute.

### EXAMPLE 2

Example 2 is identical to Control Example 1 except that the heat seal temperature was at 204.4°C (400°F).

### EXAMPLE 3

Example 3 is identical to Example 2 except that the sample was heat sealed for a contact time of three seconds.

### COMPARATIVE EXAMPLE 4

Comparative Example 4 is identical to Control Example 1, except that in the adhesive composition, EPR-1 was used instead of SBS-1.

### COMPARATIVE EXAMPLE 5

Comparative Example 5 is identical to Example 2 except that in the adhesive composition, EPR-1 was used instead of SBS-1.

### COMPARATIVE EXAMPLE 6

Comparative Example 6 is identical to Example 3 except that in the adhesive composition, EPR-1 was used instead of SBS-1.

Table 1 summarizes the adhesion values of Control Example 1, Examples 2 and 3, and Comparative Examples 4-6.

**Table 1**

| Examples | Adhesion (PLI) | Comparative Examples | Comparative Adhesion Kg/m (PLI) | Adhesion Enhancement (%) |
|---|---|---|---|---|
| Control Ex. 1 | 6.5 | Comparative Ex. 4 | 67.7 (3.8) | 171 |
| Example 2 | 3.7 | Comparative Ex. 5 | 16.1 (0.9) | 411 |
| Example 3 | 4.5 | Comparative Ex. 6 | 30.3 (1.7) | 265 |

Table 1 demonstrates that the process of the invention using samples containing an SBS/grafted PE-based adhesive not only provides good adhesion values at low contact temperatures and time, but also demonstrates improved adhesion retention at low contact temperatures over a range of contact times, relative to EPR-based adhesives.

### CONTROL EXAMPLE 7

Control Example 7 is identical to Control Example 1 except that in the adhesive composition, MGraft-2 was used instead of Mgraft-1.

### EXAMPLE 8

Example 8 is identical to Example 2 except that in the adhesive composition, Mgraft-2 was used instead of Mgraft 1.

### EXAMPLE 9

Example 9 is identical to Example 3 except that in the adhesive composition, Mgraft-2 was used instead of Mgraft-1.

### COMPARATIVE EXAMPLE 10

Comparative Example 10 is identical to Comparative Example 4 except that in the adhesive composition, Mgraft-2 was used instead of Mgraft-1.

### COMPARATIVE EXAMPLE 11

Comparative Example 11 is identical to Comparative Example 5 except that in the adhesive composition, Mgraft-2 was used instead of Mgraft-1.

### COMPARATIVE EXAMPLE 12

Comparative Example 12 is identical to Comparative Example 6 except that in the adhesive composition, Mgraft-2 was used instead of Mgraft-1.

Table 2 summarizes the adhesion values of Control Example 7, Examples 8 and 9, and Comparative Examples 10-12.

**Table 2**

| Examples | Adhesion (PLI) | Comparative Examples | Comparative Adhesion Kg/m (PLI) | Adhesion Enhancement (%) |
|---|---|---|---|---|
| Control Ex. 7 | 6.9 | Comparative Ex. 10 | 53.5 (3.0) | 230 |
| Example 8 | 3.8 | Comparative Ex. 11 | 25.0 (1.4) | 271 |
| Example 9 | 4.9 | Comparative Ex. 12 | 25.0 (1.4) | 350 |

Table 2 demonstrates that the process of the invention using samples containing an SBS/grafted PE-based adhesive not only provides good adhesion values at low contact temperatures and time, but also demonstrates improved adhesion retention at low contact temperatures over a range of contact times, relative to EPR-based adhesives.

### CONTROL EXAMPLE 13

Control Example 13 is identical to Control Example 1 except that in the adhesive composition, Mgraft-3 was used instead of Mgraft-1.

### EXAMPLE 14

Example 14 is identical to Example 2 except that in the adhesive composition, Mgraft-3 was used instead of Mgraft-1.

### EXAMPLE 15

Example 15 is identical to Example 3 except that in the adhesive composition, Mgraft-3 was used instead of Mgraft-1.

### COMPARATIVE EXAMPLE 16

Comparative Example 16 is identical to Comparative Example 4 except that in the adhesive composition, Mgraft-3 was used instead of Mgraft-1.

### COMPARATIVE EXAMPLE 17

Comparative Example 17 is identical to Comparative Example 5 except that in the adhesive composition, Mgraft-3 was used instead of Mgraft-1.

### COMPARATIVE EXAMPLE 18

Comparative Example 18 is identical to Comparative Example 6 except that in the adhesive composition, Mgraft-3 was used instead of Mgraft-1.

Table 3 summarizes the adhesion values of Control Example 13, Examples 14 and 15, and Comparative Examples 16-18.

**Table 3**

| Examples | Adhesio n (PLI) | Comparative Examples | Comparative Adhesion Kg/m (PLI) | Adhesion Enhancement (%) |
|---|---|---|---|---|
| Control Ex. 13 | 6.3 | Comparative Ex. 16 | 26.8 (1.5) | 420 |
| Example 14 | 3.4 | Comparative Ex. 17 | 8.9 (0.5) | 680 |
| Example 15 | 4.2 | Comparative Ex. 18 | 16.1 (0.9) | 467 |

Table 3 demonstrates that the process of the invention using samples containing an SBS/grafted plastomer-based adhesive not only provides good adhesion values at low contact temperatures and time, but also demonstrates improved adhesion retention at low contact temperatures over a range of contact times, relative to EPR-based adhesives.

### CONTROL EXAMPLE 19

Control Example 19 is identical to Control Example 1 except that in the adhesive composition, Mgraft-4 was used instead of Mgraft-1.

### EXAMPLE 20

Example 20 is identical to Example 2 except that in the adhesive composition, Mgraft-4 was used instead of Mgraft-1.

### EXAMPLE 21

Example 21 is identical to Example 3 except that in the adhesive composition, Mgraft-4 was used instead of Mgraft-1.

### COMPARATIVE EXAMPLE 22

Comparative Example 22 is identical to Comparative Example 4 except that in the adhesive composition, Mgraft-4 was used instead of Mgraft-1.

### COMPARATIVE EXAMPLE 23

Comparative Example 23 is identical to Comparative Example 5 except that in the adhesive composition, Mgraft-4 was used instead of Mgraft-1.

### COMPARATIVE EXAMPLE 24

Comparative Example 24 is identical to Comparative Example 6 except that in the adhesive composition, Mgraft-4 was used instead of Mgraft-1. Table 4 summarizes the adhesion values of Control Example 19, Examples 20 and 21, and Comparative Examples 22-24.

**Table 4**

| Examples | Adhesion (PLI) | Comparative Examples | Comparative Adhesion kg/m (PLI) | Adhesion Enhancement (%) |
|---|---|---|---|---|
| Control Ex. 19 | 5.7 | Comparative Ex. 22 | 103.4 (5.8) | 98 |
| Example 20 | 3.9 | Comparative Ex. 23 | 3.6 (0.5) | 780 |
| Example 21 | 3.7 | Comparative Ex. 24 | 42.8 (2.4) | 154 |

Table 4 demonstrates that the process of the invention using samples containing an SBS/grafted plastomer-based adhesive not only provides good adhesion values at low contact temperatures and time, but also demonstrates improved adhesion retention at low contact temperatures over a range of contact times, relative to EPR-based adhesives.

## Claims

1. A process comprising:
- contacting an adhesive layer having a first side and a second side, on its first side with a metal layer having a first side and a second side, on its first side, at a temperature of 162.8 °C to 218.3 °C (325ºF to 425ºF) for a contact time of 0.5 to 5.0 seconds, thereby adhering the adhesive layer to the metal layer to form a multilayer structure,
the adhesive layer comprising:
(a) 45 to 85 wt% of an ethylene-C₄₋₈ α-olefin linear low density copolymer;
(b) 5 to 25 wt% of a polymer grafted with an ethylenically unsaturated carboxylic acid or acid derivative; and
(c) 10 to 30 wt% of a styrene-butadiene-styrene triblock copolymer having an MI of 5 to 50 measured according to ASTM D1238 (200° C; 5 kg).

2. The process of claim 1 wherein the temperature is from 176.7 °C to 215.6 °C (350ºF to 420ºF).

3. The process of claim 1 wherein the contact time is 0.5 to 2.5 seconds.

4. The process of claim 1 further comprising that the adhesive layer and the metal layer are contacted at a pressure of from 0.069 MPa to 0.345 MPa (10 to 50 psig).

5. The process of claim 1 further comprising contacting a second adhesive layer having a first side and a second side, on its first side at a temperature of 162.8 °C to 218.3°C (325°F to 425°F), with the second side of the metal layer for a contact time of 0.5 to 5.0 seconds, thereby adhering the second adhesive layer to the metal layer, wherein the multilayer structure has the form A/M/A, where A is the adhesive layer and M is the metal.

6. The process of claim 5 further comprising contacting polyolefin layers having a first side and a second side, on their first sides at a temperature of 162.8 °C to 218.3 °C (325ºF to 425ºF), with the second sides of the second adhesive layers for a contact time of 0.5 to 5.0 seconds, thereby adhering the polyolefin layers to the adhesive layers, wherein the multilayer structure has the form P/A/M/A/P, where P is the polyolefin layer.

7. The process of claim 1 further comprising contacting a polyolefin layer having a first side and a second side, on its first side at a temperature of 162.8 °C to 218.3 °C (325ºF to 425ºF),, with the second side of the adhesive layer for a contact time of 0.5 to 5.0 seconds, thereby adhering the polyolefin layer to the adhesive layer, wherein the multilayer structure has the form P/A/M, where A is the adhesive layer, M is the metal layer and P is the polyolefin layer.

8. The process of claim 7 further comprising contacting a second adhesive layer having a first side and a second side, on its first side with the second side of the polyolefin layer, and contacting a second metal layer having a first side and a second side, on its first side with the second side of the second adhesive layer, at a temperature of 162.8 °C to 218.3 °C (325ºF to 425ºF), for a contact time of 0.5 to 5.0 seconds, thereby adhering the second adhesive layer to the polyolefin layer and the second metal layer to the second adhesive layer, wherein the multilayer structure has the form M/A/P/A/M.

## Patentansprüche

1. Verfahren, umfassend:
- Kontaktieren einer Klebeschicht, die eine erste Seite und eine zweite Seite aufweist, auf ihrer ersten Seite mit einer Metallschicht, die eine erste Seite und eine zweite Seite aufweist, auf deren erster Seite bei einer Temperatur von 162,8 °C bis 218,3 °C (325 °F bis 425 °F) für eine Kontaktzeit von 0,5 bis 5,0 Sekunden, wodurch die Klebeschicht an die Metallschicht geklebt wird, um eine Mehrschichtstruktur zu bilden,
wobei die Klebeschicht umfasst:
(a) 45 bis 85 Gew.% eines linearen Ethylen-C₄₋₈-α-Olefin-Copolymers mit niedriger Dichte;
(b) 5 bis 25 Gew.% eines Polymers, das mit einer ethylenisch ungesättigten Carbonsäure oder Säurederivat gepfropft ist; und
(c) 10 bis 30 Gew.% eines Styrol-Butadien-Styrol-Triblockcopolymers mit einem MI von 5 bis 50, gemessen gemäß ASTM D1238 (200 °C; 5 kg).

2. Verfahren nach Anspruch 1, wobei die Temperatur 176,7 °C bis 215,6 °C (350 °F bis 420 °F) ist.

3. Verfahren nach Anspruch 1, wobei die Kontaktzeit 0,5 bis 2,5 Sekunden beträgt.

4. Verfahren nach Anspruch 1, ferner umfassend, dass die Klebeschicht und die Metallschicht mit einem Druck von 0,069 MPa bis 0,345 MPa (10 bis 50 psig) kontaktiert werden.

5. Verfahren nach Anspruch 1, ferner umfassend Kontaktieren einer zweiten Klebeschicht, die eine erste Seite und eine zweite Seite aufweist, auf ihrer ersten Seite bei einer Temperatur von 162,8 °C bis 218,3°C (325 °F bis 425 °F) mit der zweiten Seite der Metallschicht für eine Kontaktzeit von 0,5 bis 5,0 Sekunden, wodurch die zweite Klebeschicht an die Metallschicht geklebt wird, wobei die Mehrschichtstruktur die Form A/M/A aufweist, wobei A die Klebeschicht ist und M das Metall ist.

6. Verfahren nach Anspruch 5, ferner umfassend Kontaktieren von Polyolefinschichten, die eine erste Seite und eine zweite Seite aufweisen, auf ihren ersten Seiten bei einer Temperatur von 162,8 °C bis 218,3 °C (325 °F bis 425 °F) mit den zweiten Seiten der zweiten Klebeschichten für eine Kontaktzeit von 0,5 bis 5,0 Sekunden, wodurch die Polyolefinschichten an die Klebeschichten geklebt werden, wobei die Mehrschichtstruktur die Form P/A/M/A/P aufweist, wobei P die Polyolefinschicht ist.

7. Verfahren nach Anspruch 1, ferner umfassend Kontaktieren einer Polyolefinschicht, die eine erste Seite und eine zweite Seite aufweist, auf ihrer ersten Seite bei einer Temperatur von 162,8 °C bis 218,3 °C (325 °F bis 425 °F) mit der zweiten Seite der Klebeschicht für eine Kontaktzeit von 0,5 bis 5,0 Sekunden, wodurch die Polyolefinschicht an die Klebeschicht geklebt wird, wobei die Mehrschichtstruktur die Form P/A/M aufweist, wobei A die Klebeschicht ist, M die Metallschicht ist, und P die Polyolefinschicht ist.

8. Verfahren nach Anspruch 7, ferner umfassend Kontaktieren einer zweiten Klebeschicht, die eine erste Seite und eine zweite Seite aufweist, auf ihrer ersten Seite mit der zweiten Seite der Polyolefinschicht, und Kontaktieren einer zweiten Metallschicht, die eine erste Seite und eine zweite Seite aufweist, auf ihrer ersten Seite mit der zweiten Seite der zweiten Klebeschicht bei einer Temperatur von 162,8 °C bis 218,3 °C (325 °F bis 425 °F) für eine Kontaktzeit von 0,5 bis 5,0 Sekunden, wodurch die zweite Klebeschicht an die Polyolefinschicht geklebt wird und die zweite Metallschicht an die zweite Klebeschicht geklebt wird, wobei die Mehrschichtstruktur die Form M/A/P/A/M aufweist.

## Revendications

1. Procédé comprenant :
- la mise en contact d'une couche adhésive ayant un premier côté et un second côté, sur son premier côté avec une couche métallique ayant un premier côté et un second côté, sur son premier côté, à une température de 162,8 °C à 218,3 °C (325 °F à 425 °F) pendant un temps de contact de 0,5 à 5,0 secondes, ce qui permet de faire adhérer la couche adhésive à la couche métallique pour former une structure multicouche,
la couche adhésive comprenant :
(a) 45 à 85 % en poids d'un copolymère à faible densité linéaire d'éthylène-α-oléfine en C4-8 ;
(b) 5 à 25 % en poids d'un polymère greffé avec un dérivé d'acide ou acide carboxylique éthyléniquement insaturé ; et
(c) 10 à 30 % en poids d'un copolymère tribloc styrène-butadiène-styrène ayant un MI de 5 à 50 mesuré selon la Norme ASTM D1238 (200 °C ; 5 kg).

2. Procédé selon la revendication 1 dans lequel la température est de 176,7 °C à 215,6 °C (350 °F à 420 °F).

3. Procédé selon la revendication 1 dans lequel le temps de contact est de 0,5 à 2,5 secondes.

4. Procédé selon la revendication 1 comprenant en outre la mise en contact de la couche adhésive et de la couche métallique à une pression de 0,069 MPa à 0,345 MPa (10 à 50 psig).

5. Procédé selon la revendication 1 comprenant en outre la mise en contact d'une seconde couche adhésive ayant un premier côté et un second côté, sur son premier côté à une température de 162,8 °C à 218,3 °C (325 °F à 425 °F), avec le second côté de la couche métallique pendant un temps de contact de 0,5 à 5,0 secondes, ce qui permet de faire adhérer la seconde couche adhésive à la couche métallique, la structure multicouche ayant la forme A/M/A, où A est la couche adhésive et M est le métal.

6. Procédé selon la revendication 5 comprenant en outre la mise en contact de couches de polyoléfine ayant un premier côté et un second côté, sur leurs premiers côtés à une température de 162,8 °C à 218,3 °C (325 °F à 425 °F), avec les seconds côtés des secondes couches adhésives pendant un temps de contact de 0,5 à 5,0 secondes, ce qui permet de faire adhérer les couches de polyoléfine aux couches adhésives, la structure multicouche ayant la forme P/A/M/A/P, où P est la couche de polyoléfine.

7. Procédé selon la revendication 1 comprenant en outre la mise en contact d'une couche de polyoléfine ayant un premier côté et un second côté, sur son premier côté à une température de 162,8 °C à 218,3 °C (325 °F à 425 °F), avec le second côté de la couche adhésive pendant un temps de contact de 0,5 à 5,0 secondes, ce qui permet de faire adhérer la couche de polyoléfine à la couche adhésive, la structure multicouche ayant la forme P/A/M, où A est la couche adhésive, M est la couche métallique et P est la couche de polyoléfine.

8. Procédé selon la revendication 7 comprenant en outre la mise en contact d'une seconde couche adhésive ayant un premier côté et un second côté, sur son premier côté avec le second côté de la couche de polyoléfine, et la mise en contact d'une seconde couche métallique ayant un premier côté et un second côté, sur son premier côté avec le second côté de la seconde couche adhésive, à une température de 162,8 °C à 218,3 °C (325 °F à 425 °F), pendant un temps de contact de 0,5 à 5,0 secondes, ce qui permet de faire adhérer la seconde couche adhésive à la couche de polyoléfine et la seconde couche métallique à la seconde couche adhésive, la structure multicouche ayant la forme M/A/P/A/M.
